Europäisches Patentamt

European Patent Office

Office européen des brevets

(11) Publication number : **0 518 691 A2**

(12) # EUROPEAN PATENT APPLICATION

(21) Application number : **92305428.2**

(22) Date of filing : **12.06.92**

(51) Int. Cl.⁵ : **B29D 30/30, B29D 30/28**

(30) Priority : **12.06.91 JP 167777/91**
**18.09.91 JP 267317/91**

(43) Date of publication of application :
**16.12.92 Bulletin 92/51**

(84) Designated Contracting States :
**DE ES FR GB IT**

(71) Applicant : **BRIDGESTONE CORPORATION**
**10-1 Kyobashi 1-Chome, Chuo-Ku**
**Tokyo 104 (JP)**

(72) Inventor : **Okuyama, Koji**
**2-6-7, Arajuku-Machi**
**Kawagoe City, Saitama Pref. (JP)**

(74) Representative : **Whalley, Kevin et al**
**MARKS & CLERK 57/60 Lincoln's Inn Fields**
**London WC2A 3LS (GB)**

(54) **Method and apparatus for attaching belt-shaped member to forming drum.**

(57)   A grasping unit grasping the front end of a continuous belt-shaped member (19) is moved toward a forming drum (11) to transfer the member through a predetermined length (L). The member (19) is then grasped and fixed on both sides of a cutting position and cut thereat to obtain a belt-shaped member having a length substantially equal to the circumferential length of the forming drum. The cut belt-shaped member is then transferred to the forming drum and its front end is pressure-joined to the drum. While the forming drum is being rotated, the belt-shaped member is then supplied at a speed substantially the same as the circumferential speed of the forming drum and attached thereto. In supplying the cut belt-shaped member to the forming drum, front and rear end grasping means (74,75) grasping the front and rear ends of the member (19) may be moved at the same speeds as the circumferential speed of the forming drum. As an alternative, the member (19) may be arranged on a conveyor (17), and the conveyor and a grasping means (163) grasping the rear end of the member may be moved at the same speeds as the circumferential speed of the forming drum.

FIG. 1

EP 0 518 691 A2

This invention relates to a method and an apparatus for attaching a belt-shaped member cut in a predetermined length to a forming drum.

A method and an apparatus for attaching a belt-shaped member to a forming drum have been known which was disclosed, for example, in Japanese Patent Application Laid-open No. 2-239,053. In the method and the apparatus of the disclosed prior art, after a grasping unit grasping the front end of a continuous belt-shaped member has been moved to a forming drum and the front end has been pressure-joined to the forming drum by means of a pressure-joining member, the belt-shaped member is supplied to the rotating forming drum so as to be attached therearound approximately four fifths of its circumference.

The belt-shaped member is then grasped at its portion immediately forward of a cutting position spaced a distance substantially equal to one circumferential length of the forming drum from the front end of the belt-shaped member by means of the grasping unit. At the same time the belt-shaped member is fixed at its portion immediately rearward of the cutting position by means of an urging unit at an urging position. Thereafter, the belt-shaped member is cut at the cutting position. While the forming drum is being rotated, the grasping unit grasping the rear end of the cut belt-shaped member is then moved toward the forming drum to attach the unattached portion of the belt-shaped member to the circumference of the forming drum.

In such a method and an apparatus, however, as only one grasping unit is adapted to grasp both the front and rear ends of a belt-shaped member, the moving distances of the grasping means unavoidably become long. As a result, the cycle time for attaching the belt-shaped member to the forming drum is prolonged. Moreover, in order to grasp the rear end of the belt-shaped member by means of the grasping unit, it is required once to stop and again to start the rotation of the forming drum in the middle of the attaching operation, or at the time when the four fifths of the overall length of the belt-shaped member have been attached to the forming drum. Consequently, the number of times of stop and start of the forming drum is increased to prolong the cycle time of the operation further and there is a risk of the unattached portion of the belt-shaped member meandering when it is attached to the forming drum.

It is an object of the invention to provide a method for attaching a belt-shaped member to a forming drum, which is carried out with high efficiency in a short cycle time and does not have any risk of the belt-shaped member meandering when being attached to the forming drum.

It is another object of the invention to provide an apparatus for attaching a belt-shaped member to a forming drum, which includes grasping means having the minimum traveling distance and is able to be operated without requiring stoppage of the forming drum during one cycle time so that there is no risk of the belt-shaped member meandering when being attached to the forming drum.

In order to accomplish the above first object, the method for attaching a belt-shaped member to a forming drum according to the invention comprises steps of grasping the front end of a continuous belt-shaped member, transferring toward the forming drum the continuous belt-shaped member through a predetermined length substantially equal to one circumferential length of the forming drum, grasping the transferred belt-shaped member at its portion immediately forward of a cutting position spaced the predetermined length from the front end of the belt-shaped member and fixing the belt-shaped member at its portion immediately rearward of the cutting position, cutting the belt-shaped member at the cutting position, transferring the cut belt-shaped member grasped at the front and rear ends and pressure-joining the front end to the forming drum, and attaching the belt-shaped member to the circumference of the forming drum by supplying the belt-shaped member to the forming drum, while it is being rotated.

The above second object is accomplished by the apparatus for attaching a belt-shaped member to a forming drum according to the invention comprises front end grasping means for grasping the front end of a continuous belt-shaped member, front end driving means for transferring the continuous belt-shaped member through a predetermined length substantially equal to one circumferential length of the forming drum by moving the front end grasping means toward the forming drum, rear end grasping means for grasping the transferred belt-shaped member at its portion immediately forward of a cutting position spaced the predetermined length from the front end of the belt-shaped member, fixing means for fixing the belt-shaped member at its portion immediately rearward of the cutting position, cutting means for cutting at the cutting position the belt-shaped member grasped by the rear end grasping means and fixed by the fixing means, and rear end driving means for moving the rear end grasping means grasping the rear end of the cut belt-shaped member at the same speed as that of the front end grasping means and in synchronism therewith when the front end grasping means grasping the front end of the cut belt-shaped member is moved toward the forming drum, and the front end grasping means pressure-joining the front end of the belt-shaped member to the forming drum when the front end has arrived at the forming drum, and then the rear end grasping means moving toward the forming drum at a speed substantially the same as the circumferential speed of the forming drum being rotated, thereby supplying the belt-shaped member to the forming drum and attaching the member to the circumference of the forming drum.

With this arrangement, first the front end of a continuous belt-shaped member is grasped by means of the front end grasping means. Second, the front end grasping means grasping the front end of the belt-shaped member is then moved toward the forming drum by means of the front end driving means to transfer the belt-shaped member through a predetermined length substantially equal to the one circumferential length of the forming drum. Thereafter, the belt-shaped member transferred by the predetermined length is grasped at its portion immediately forward of the cutting position spaced the predetermined length from the front end of the belt-shaped member by means of the rear end grasping means and is then fixed at its portion immediately rearward of the cutting position by means of the fixing means.

The belt-shaped member grasped and fixed by the rear end grasping means and the fixing means is then cut at the cutting position to obtain a belt-shaped member having the predetermined length. The front and rear end grasping means grasping the front and rear ends of the cut belt-shaped member, respectively, are moved in synchronism with each other at the same speeds by means of the front and rear end driving means to transfer the cut belt-shaped member toward the forming drum. When the front end of the belt-shaped member has arrived at the forming drum, the front end is pressure-joined to the forming drum by means of the front end grasping means. Thereafter, while the forming drum is being rotated, the rear end grasping means is moved toward the forming drum at a speed substantially the same as the circumferential speed of the forming drum by the rear end driving means so that the belt shaped member is supplied to the forming drum so as to be attached to the circumference thereof.

According to the invention, the front and rear ends of the belt shaped member are grasped by means of the front and rear end grasping means, while these front and rear end grasping means are moved by the front and rear end driving means in this manner. Therefore, the front and rear end grasping means are moved through the distances which are necessary and minimum values. As a result, the cycle time for attaching the belt-shaped member to the forming drum can be shortened. Moreover, as the rear end of the belt-shaped member has been grasped by means of the rear end grasping means before commencement of attachment of the member, it is not required to stop the forming drum for grasping the rear end of the belt-shaped member during the attachment. Consequently, there is no risk of the belt-shaped member meandering during the attaching of the member to the forming drum.

In another aspect, the method for attaching a belt-shaped member to a forming drum according to the invention comprises steps of grasping the front end of a continuous belt-shaped member, transferring toward the forming drum the continuous belt-shaped member grasped at its front end through a predetermined length substantially equal to one circumferential length of the forming drum and arranging the belt-shaped member on a conveyor, releasing the grasped front end of the transferred belt-shaped member from the grasping means, grasping the belt-shaped member at its portion immediately forward of a cutting position spaced the predetermined length from the front end of the belt-shaped member and fixing the belt-shaped member at its portion immediately rearward of the cutting position, cutting the belt-shaped member at the cutting position, transferring the cut belt-shaped member grasped at its rear end to the forming drum by the conveyor and pressure-joining the front end of the belt-shaped member to the forming drum, and attaching the belt-shaped member to the circumference of the forming drum in one operation by supplying the belt-shaped member grasped at its rear end to the forming drum, while it is being rotated.

Further, the apparatus for attaching a belt-shaped member to a forming drum according to the invention comprises grasping means for grasping a continuous belt-shaped member, driving means for transferring the continuous belt-shaped member through a predetermined length substantially equal to one circumferential length of the forming drum by moving the grasping means grasping the front end of the continuous belt-shaped member toward the forming drum, a conveyor on which the belt-shaped member is arranged when the grasping means has released the front end of the belt-shaped member, fixing means for fixing the belt-shaped member at its portion immediately rearward of a cutting position when the grasping means has been moved to a position immediately forward of the cutting position spaced the predetermined length from the front end of the belt-shaped member and has grasped the belt-shaped member at the position, cutting means for cutting at the cutting position the belt-shaped member grasped by the grasping means and fixed by the fixing means, and pressure-joining means for pressure-joining the front end of the belt-shaped member to the forming drum when the front end has arrived at the forming drum by moving the conveyor and the grasping means grasping the rear end of the cut belt-shaped member at the same speeds and in synchronism with each other, thereby attaching the belt-shaped member to the circumference of the forming drum in one operation by moving the conveyor and the grasping means grasping the rear end of the cut belt-shaped member toward the forming drum at speeds substantially the same as the circumferential speed of the forming drum, while it is being rotated.

With this arrangement, first the front end of a continuous belt-shaped member is grasped by means of the grasping means. Second, the grasping means grasping the front end of the belt-shaped member is then moved toward the forming drum by means of the driving means to pull and transfer the belt-shaped member through a predetermined length substantially equal to the one circumferential length of the forming drum. Thereafter, the front end of the belt-shaped member is released from the grasping means and arranged on a conveyor. The grasping means is then moved away from the forming drum by means of the driving means, and the belt-shaped member is grasped at its portion immediately forward of the cutting position spaced the predetermined length from the front end of the belt-shaped member by means of the grasping means and is fixed at its portion immediately rearward of the cutting position by means of the fixing means.

The belt-shaped member grasped and fixed by the grasping means and the fixing means is then cut at the cutting position to obtain a belt-shaped member having the predetermined length. The conveyor and the grasping means grasping the rear end of the cut belt-shaped member are moved in synchronism with each other at the same speeds to transfer the cut belt-shaped member toward the forming drum. When the front end of the belt-shaped member has arrived at the forming drum, the front end is pressure-joined to the forming drum by means of the pressure-joining means. Thereafter, while the forming drum is being rotated, the conveyor and the grasping means grasping the rear end of the belt-shaped member are moved in synchronism with each other toward the forming drum at a speed substantially the same as the circumferential speed of the forming drum so that the belt shaped member is supplied to the forming drum so as to be attached to the circumference thereof in one operation or without rest.

According to the invention, while the forming drum is continuously rotated, the belt-shaped member is attached thereto in one operation. Therefore, the number of times of stop and start of the forming drum is decreased so that the cycle time for attaching the belt-shaped member to the forming drum can be shortened. With this arrangement, it is not required to stop the forming drum for grasping the rear end of the belt-shaped member during the attaching of the member so that any meandering of the belt-shaped member can be prevented.

The invention will be more fully understood by referring to the following detailed specification and claims taken in connection with the appended drawings.

Fig. 1 is a schematic front view illustrating the first embodiment of the invention;

Fig. 2 is a front elevation illustrating the proximity of the cutting means used in the invention;

Fig. 3 is a front view illustrating the proximity of the front end grasping means used in the first embodiment of the invention;

Fig. 4 is a front view illustrating the proximity of the rear end grasping means used in the first embodiment of the invention;

Fig. 5 is a schematic front view illustrating the second embodiment of the invention; and

Fig. 6 is a front view illustrating the proximity of the grasping means used in the second embodiment of the invention.

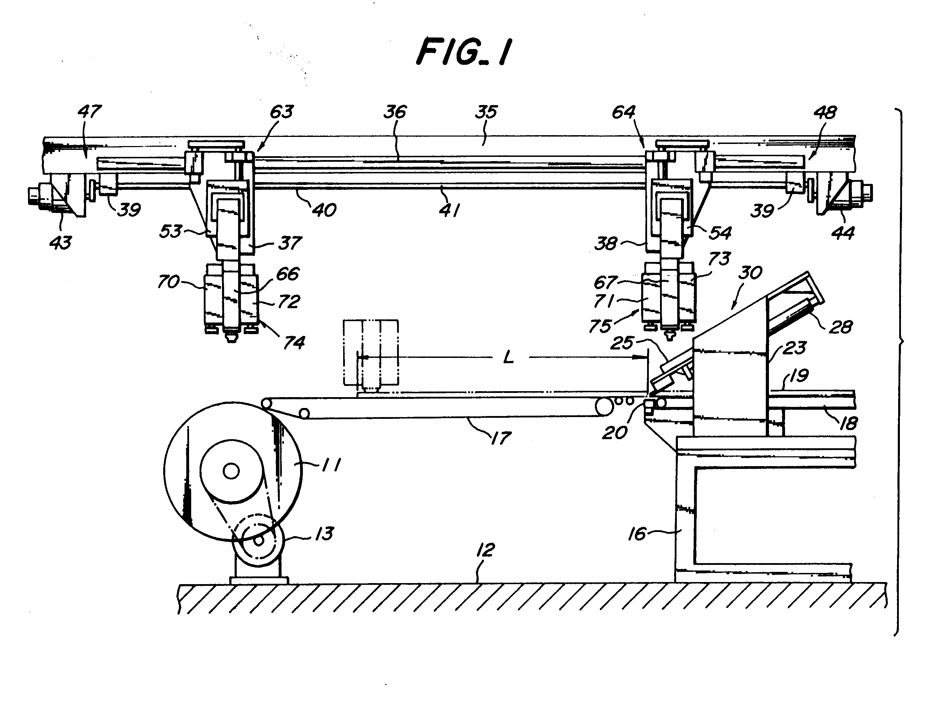

Referring to Fig. 1 illustrating one embodiment of the invention, a forming drum 11 is adapted to be rotated at any rotating speeds by required numbers of rotation by a motor 13 located on the floor 12. A belt-shaped member is fed from the right to the left viewed in Fig. 1 toward the forming drum. In the specification, "forward" denotes the side of the forming drum 11, while "rearward" means the opposite side thereto. A frame 16 is further arranged on the floor 12 at a position remote from and rearward of the forming drum 11 and a conveyor 18 is supported on the frame 16, which extends in the advancing direction of the belt-shaped member. The conveyor 18 serves to supply continuous belt-shaped members 19 such as treads to the forming drum 11. Between the conveyor 18 and the forming drum 11 is arranged a conveyor 17 for supplying the belt-shaped members 19 to the forming drum 11.

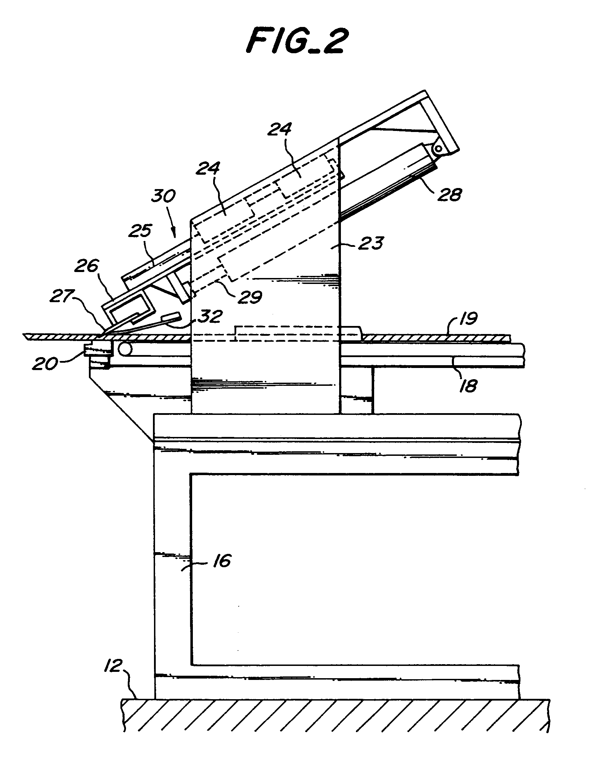

Referring to Figs. 1 and 2, on the forward end of the frame 16 is mounted an anvil 20 extending in the width direction of the belt-shaped member 19 and adapted to abut against the blade of a cutter later described. On the forward end of the frame 16 is mounted a bracket 23 carrying a carriage 26 which is movable in the forwardly inclined direction and guided by a slide block 24 and a rail 25. A cutter 27 having a heater (not shown ) built therein is mounted on the forward end of the carriage 26. When the carriage 26 has been moved by the extension of the piston rod 29 of a cylinder 28 to approach the anvil 20, the cutter 27 cuts the belt-shaped member 19 along its width direction at the cutting position spaced a predetermined length L from the forward end of the belt-shaped member 19.

The predetermined length L is substantially equal to one circumferential length of the forming drum 11 in the case that the front and rear ends of the belt-shaped member 19 are butt-joined. When the front and rear ends of the belt-shaped member 19 are joined by overlapping, the predetermined length L is substantially equal to an overlapping width plus one circumferential length of the forming drum 11.

On the other hand, in the case that the front and rear ends of the belt-shaped member 19 are joined with each other such that the clearance therebetween is less than a predetermined value (partially butt-joined or overlapped), the predetermined length L is a length between the one circumferential length of the forming drum 11 and the circumferential length minus a determined distance. However, an actual length of the cut belt-shaped member 19 is generally somewhat different from the predetermined length L due to cutting errors, shrinkage of rubber with time or the like after cutting.

The anvil 20, the carriage 26, the cutter 27 and the cylinder 28 form as a whole cutting means 30 for cutting the belt-shaped member 19 along its width direction at the cutting position. An urging unit 32 as fixing means comprising rectangular thin leaf springs is provided rearward of the anvil 20 and is adapted to be pivotally moved by action of a cylinder (not shown ) to fasten to the anvil the belt-shaped member 19 at a location immediately rearward of the cutting position for cutting the member 19.

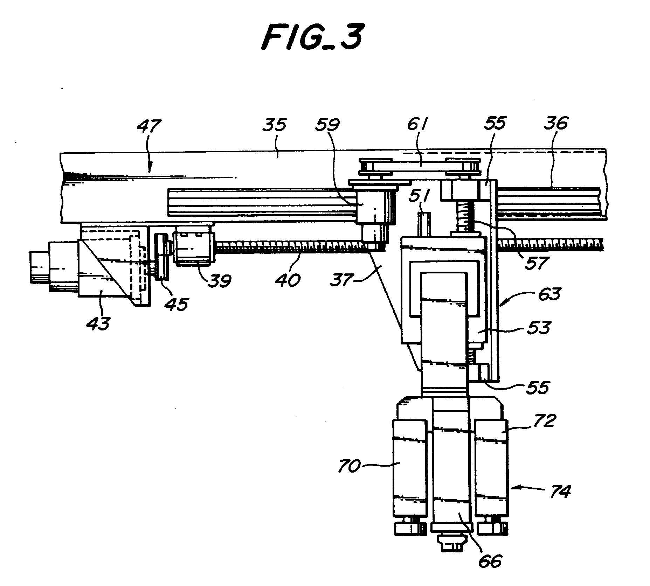

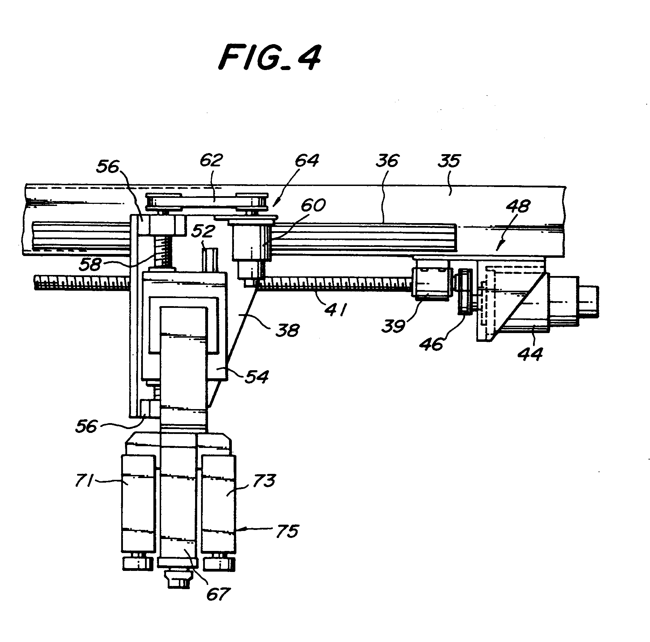

Referring to Figs. 1, 3 and 4, a beam 35 is provided above the forming drum 11 to extend in the direction of the conveyor 17. A horizontal rail 36 is fixed to one surface of the beam 35. Traveling frames 37 and 38 spaced from each other in the longitudinal direction of the beam 35 are fitted on the horizontal rail 36 so as to be hung on one side of the beam 35 and supported movably in the longitudinal directions of the beam 35. Two pairs of bearings 39 spaced from each other in the longitudinal direction of the beam 35 are mounted on the underside thereof for rotatably supporting screw shafts 40 and 41 parallel to the beam 35, respectively. The screw shaft 40 is threadedly engaged in the traveling frame 37, while the other screw shaft 41 is threadedly engaged in the other traveling frame 38. Motors 43 and 44 are fixed on the beam 35, the former being forward of the traveling frame 37 and the latter being rearward of the traveling frame 38.

Driving forces of the motors 43 and 44 are transmitted through belts 45 and 46 to the screw shafts 40 and 41, respectively. When the motors 43 and 44 are energized, the screw shafts 40 and 41 are rotated so that the traveling frames 37 and 38 are reciprocatively moved in the longitudinal directions of the beam 35 and guided by the rail 36, respectively. The traveling frame 37, the screw shaft 40, the motor 43 form as a whole front end driving means 47 for moving a front end grasping unit later described toward the forming drum 11. On the other hand, the traveling frame 38, the screw shaft 41, the motor 44 form as a whole rear end driving means 48 for moving a rear end grasping unit later described toward the forming drum 11.

Vertically extending rails 51 and 52 are fixed to the traveling frames 37 and 38, respectively, and lift frames 53 and 54 are vertically movably supported by the rails 51 and 52, respectively. To the traveling frames 37 and 38 are mounted pairs of bearings 55 and 56, respectively, rotatably supporting vertical screw shafts 57 and 58, respectively, which are threadedly engaged in the lift frames 37 and 38, respectively. Onto the traveling frames 37 and 38 are mounted motors 59 and 60, respectively, whose driving forces are transmitted through belts 61 and 62 to the screw shafts 57 and 58.

When the motors 59 and 60 are energized, the lift frames 53 and 54 are vertical moved, respectively. The lift frame 53, the screw shaft 57 and the motor 59 form as a whole front end lift means 63 for lifting the front end grasping means later described. On the other hand, the lift frame 54, the screw shaft 58 and the motor 60 form as a whole rear end lift means 64 for lifting the rear end grasping means later described.

A front end grasping unit 66 is mounted on the lower end of the lift frame 53 for grasping the front end of the belt-shaped member 19 on both its sides. On the other hand, a rear end grasping unit 67 is mounted on the lower end of the lift frame 54 for grasping the rear end of the belt-shaped member 19 on both its sides. First pressure-joining units 70 and 71 are mounted on the lift frames 53 and 54 on the forward side of the front and rear end grasping units 66 and 67, respectively, and second pressure-joining units 72 and 73 are mounted on the lift frames 53 and 54 on the rearward side of the front and rear end grasping units 66 and 67, respectively.

The front and rear ends of the belt-shaped member 19 attached to the forming drum 11 are pressure-joined thereto by means of the first and second pressure-joining units 70, 71, 72 and 73. The front end grasping unit 66 and the first and second pressure-joining units 70 and 72 form as a whole the front end grasping means 74, while the rear end grasping unit 67 and the first and second pressure-joining units 71 and 73 form as a whole the rear end grasping means 75.

The operation of the apparatus described above according to the invention will be explained hereinafter.

Now, it is assumed that the front end grasping unit 66 of the front end grasping means 74 grasps the front end of a continuous belt-shaped member 19 on its upper and lower sides which rests immediately rearward of the cutting position. At this time, the rear end grasping means 75 is poised at its awaiting position rearward of the front grasping means 74. The motor 43 of the front end driving means 47 is then energized to rotate the screw shaft 40 so that the front end grasping unit 66 grasping the front end of the belt-shaped member 19 is moved toward the forming drum 11 to transfer the belt-shaped member 19 to it.

During such a movement, the the conveyors 17 and 18 are moved at the same speed as that of the front end grasping grasping unit 66. When the belt-shaped member 19 has been advanced through the predetermined length L substantially equal to the one circumferential length of the forming drum 11 and the front end of the belt-shaped member 19 has assumed a position spaced the predetermined length L from the cutting position as shown in phantom lines in Fig. 1, the motor 43 is deenergized and the conveyors 17 and 18 are stopped.

The motor 44 of the rear end driving means 48 is then energized to rotate the screw shaft 41 so that the rear end grasping unit 67 is moved to a position which is above the belt-shaped member 19 and immediately forward of the cutting position. After the motor 60 is then energized to rotate the screw shaft 58 so as to lower the rear end grasping unit 67, the belt-shaped member 19 is grasped at its portion immediately forward of the cutting position on its upper and lower sides by means of the rear end grasping unit 67. At this moment, the urging unit 32 is pivotally moved by the action of the cylinder (not shown) to urge and fix the belt-shaped member 19 at its portion immediately rearward of the cutting position to the anvil 20.

Thereafter, the cylinder 28 is actuated to move the carriage 26 and the cutter 27 toward the anvil 20 so that the belt-shaped member 19 is cut along its width direction at the cutting position between the rear end grasping unit 67 and the urging unit 32 by the cutter 27 and the anvil 20 in cooperation therewith. As a result, a belt-shaped member 19 of the predetermined length L is cut out of the continuous belt-shaped member 19. At this time, the rear end grasping unit 67 grasps the rear end of the cut belt-shaped member 19, while the urging unit 32 clamps the front end of the continuous belt-shaped member 19 to the anvil 20.

Thereafter, the motors 43 and 44 of the front and rear end driving means 47 and 48 are energized to move the front and rear end grasping units 66 and 67 grasping the front and rear ends of the belt-shaped member 19 forward in synchronism with each other at the same speeds so that the cut belt-shaped member 19 of the predetermined length L is transferred toward the forming drum 11 without changing its length. During the transfer of the belt-shaped member 19, the conveyor 17 is also moved at the same speed as that of the belt-shaped member 19.

When the front end grasping unit 66 has been transferred to a position immediately above the uppermost portion of the forming drum 11 and the front end of the belt-shaped member 19 has arrived at the position where the front end is to be attached to the forming drum 11, the transfer of the belt-shaped member 19 is stopped. The front end of the belt-shaped member 19 is then urged and pressure-joined to the forming drum 11 by means of the second pressure-joining unit 72 of the front end grasping means 74. After the front end of the belt-shaped member 19 is then released from the front end grasping unit 66, the motors 59 and 43 are energized to raise and move forward the front end grasping means 74 so that it is retracted from the position immediately above the forming drum 11.

The motor 13 is energized to rotate the forming drum 11 at a predetermined circumferential speed, while the motor 44 is energized to move the rear end grasping unit 67 grasping the rear end of the belt-shaped member 19 at a speed substantially the same as the circumferential speed of the forming drum 11. During the movement of the belt-shaped member 19, the conveyor 17 is also moved toward the forming drum 11 at a speed substantially the same as the circumferential speed of the forming drum 11. As a result, the belt-shaped member 19 is supplied to the forming drum 11 and attached to the outer circumference thereof.

When the belt-shaped member 19 has been attached onto the forming drum 11 in one circumferential length in this manner, the rear end grasping unit 67 arrives at the position immediately above the uppermost portion of the forming drum 11. The rear end of the belt-shaped member 19 is then urged and pressure-joined to the forming drum 11 by means of the first pressure-joining unit 71 of the rear end grasping means 75.

After the rear end of the belt-shaped member 19 is then released from the rear end grasping unit 67, the rear end grasping means 75 is slightly moved forwardly. The rear end of the belt-shaped member 19 is then urged to the forming drum by means of the second pressure-joining unit 73 so that the front and rear ends of the belt-shaped member 19 are joined with each other. Thereafter, the front and rear end grasping means 74 and 75 are moved to their initial positions by means of the front and rear end lift means 63 and 64 and the front and rear end driving means 47 and 48, while the front end of the continuous belt-shaped member 19 is grasped by means of the front end grasping unit 66. The above is one cycle of the operation of the apparatus described above. This cycle is repeated thereafter.

As described above, the front and rear ends of the belt-shaped member 19 are grasped by means of the front and rear end grasping means 74 and 75 which are moved by means of the front and rear end driving means 47 and 48 in the above embodiment. Therefore, the front and rear end grasping means 74 and 75 are moved through the distances which are necessary and minimum values. As a result, the cycle time for the attachment of the belt-shaped member can be shortened. Moreover, as the rear end of the belt-shaped member has been grasped by means of the rear end grasping means 75 before commencement of the attachment, it is not required to stop the forming drum 11 for grasping the rear end of the belt-shaped member during the attachment. Consequently, there is no risk of the belt-shaped member meandering during its attachment to the forming drum.

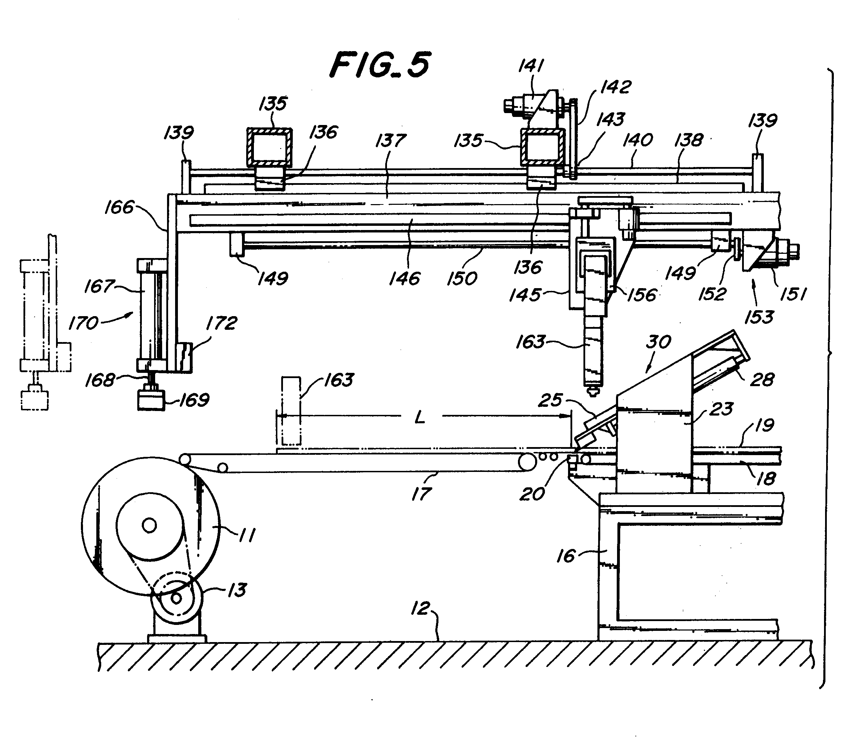

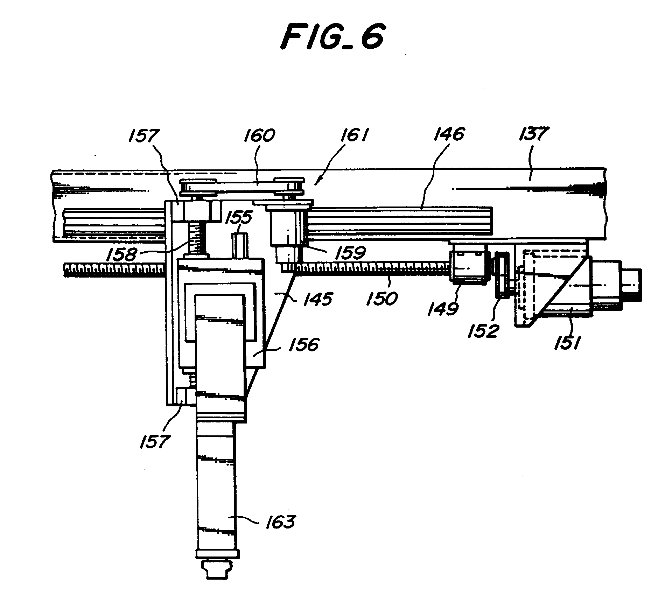

Another embodiment of the invention will be explained by referring to Figs. 5 and 6. Since a forming drum 11, cutting means 30 supported by a frame 16 and a conveyor 17 therebetween are quite the same as those in the first embodiment described above, these will not be described in further detail.

Referring to Figs. 5 and 6, above the conveyor 17 are provided a pair of support frames 135 spaced from each other in the extending direction of the conveyor 17. Slide blocks 136 are fixed to undersides of the support frames 135 and slidably engage a rail 138 fixed on the upper surface of a horizontal beam 137 horizontally extending in the extending direction of the conveyor 17. A pair of bearings 139 are mounted on the upper surface of the horizontal beam 137 so as to be spaced from each other in the extending direction of the horizontal beam 137 for rotatably supporting a screw shaft 140 in parallel with the horizontal beam 137.

A motor 141 is fixed on the upper end of the support frame 135, whose driving force is transmitted through a belt 142 to a screw block 143 which is rotatably supported by the support frame 135 and threadedly engaged with the screw shaft 140. As a result, when the motor 141 is energized, the horizontal beam 137 is moved in its extending direction supported by the support frame 135. A traveling frame 145 is fitted on a rail 146 fixed to one surface of the horizontal beam 137 so as to be hung on one side of the horizontal beam 137 and supported movably in the extending directions of the horizontal beam 137. A pair of bearings 149 spaced from each other in the extending direction of the horizontal beam 137 are mounted on the underside thereof for rotatably supporting a screw shaft 150 parallel to the horizontal beam 137. The screw shaft 150 is threadedly engaged in the traveling frame 145.

A motor 151 is mounted on the horizontal beam 137 at a position rearward of the traveling frame 145, whose driving force is transmitted through a belt 152 to the screw shaft 150. When the motor 151 is energized, the screw shaft 150 is rotated to move the traveling frame 145 guided by the rail 146 reciprocatively. The traveling frame 145, the screw shaft 150 and the motor 151 form as a whole grasping unit driving means 153 for moving grasping means later described toward the forming drum 11.

A vertically extending rail 155 is fixed to the traveling frame 145, and a lift frame 156 is vertically movably supported by the rail 155. A pair of bearings 157 are mounted on the traveling frame 145 for rotatably supporting a vertical screw shaft 158 threadedly engaged in the lift frame 156. A motor 159 is mounted on the traveling frame 145, whose driving force is transmitted through a belt 160 to the vertical screw shaft 158 to move the lift frame 156 in vertical directions. The lift frame 156, the vertical screw shaft 158 and the motor 159 form as a whole grasping unit lift means 161 for lifting the grasping means later described. Grasping means 163 is mounted on the lower end of the lift frame 156 for grasping the belt-shaped member on both its sides.

A vertically extending support plate 166 is fixed onto the front end of the horizontal beam 137 for supporting a vertically extending cylinder 167 mounted thereon. A pressure-joining unit 169 is mounted on the lower end of the piston rod 168 of the cylinder 167. When the cylinder 167 is actuated to extend the piston rod 168, the belt-shaped member 19 is pressure-joined to the forming drum. The cylinder 167 and the pressure-joining unit 169 form as a whole pressure-joining means 170.

A sensor 172 is fixed to a rear face of the support plate 166, which detects the front end of the belt-shaped member pressure-joined to the forming drum 11 to output detection signals to control means (not shown). When the detection signal is input into the control means, it calculates the shifted distance of the front end from the set position to control the movements and speeds of the conveyor 17 and grasping means 163 and the circumferential speed of the forming drum 11 so that the belt-shaped member 19 is contracted or elongated to correct its length to a predetermined length L.

The operation of the apparatus of the second embodiment according to the invention will be explained hereinafter.

It is assumed that the front end grasping means 163 grasps the front end of a continuous belt-shaped member 19 on its upper and lower sides which rests immediately rearward of the cutting position. At this time, the pressure-joining means 170 is poised at its awaiting position immediately above the forming drum 11. After an urging unit 32 has been retracted from the belt-shaped member 19, the motor 151 of the grasping unit driving means 153 is energized to rotate the screw shaft 150. As a result, the grasping means 163 grasping the front end of the belt-shaped member 19 is moved toward the forming drum 11 so that the belt-shaped member 19 is pulled and transferred toward the forming drum 11. During such a movement of the belt-shaped member 19, the conveyors 17 and 18 are moved at a speed equal to that of the grasping means 163.

When the belt-shaped member 19 has been pulled and moved through the predetermined length L substantially equal to the one circumferential length of the forming drum 11 and the front end of the belt-shaped member 19 has assumed a position spaced the predetermined length L from the cutting position as shown in phantom lines in Fig. 5, the motor 151 is deenergized and the conveyors 17 and 18 are stopped. The front end of the belt-shaped member 19 is then released from the grasping means 163 so that the belt-shaped member 19 rests on the conveyor 17.

Thereafter, the motor 159 is energized so as to rotate the screw shaft 158 to raise the lift frame 156 and the grasping means 163, while the motor 151 of the driving means 153 is energized so as to rotate the screw shaft 150 to move the grasping means 163 to a position immediately forward of the cutting position and directly above the belt-shaped member 19. After the motor 159 is energized so as to rotate the screw shaft 158 to lower the grasping means 163, the belt-shaped member 19 is grasped on its portion immediately forward of the cutting position on its upper and lower sides by means of the grasping means 163. At this moment, the urging unit 32 is pivotally moved by the action of the cylinder (not shown) to urge and fix the belt-shaped member 19 at its portion immediately rearward of the cutting position to the anvil 20.

Thereafter, the cylinder 28 is actuated to move the carriage 26 and the cutter 27 toward the anvil 20 so that the belt-shaped member 19 is cut along its width direction at the cutting position between the grasping means 163 and the urging unit 32 by the cutter 27 and the anvil 20 in cooperation therewith. As a result, a belt-shaped member 19 of the predetermined length L (actually somewhat different from the predetermined length L described above) has been cut out of the continuous belt-shaped member 19. At this time, the grasping means 163 grasps the rear end of the cut belt-shaped member 19, while the urging unit 32 clamps the front end of the remaining continuous belt-shaped member 19 to the anvil 20. Thereafter, the cylinder 28 is actuated to return the cutter 27 to its initial position.

The conveyor 17 is moved to transfer the cut belt-shaped member 19 toward the forming drum 11. At the same time, the motor 151 is energized to move the grasping means 163 grasping the rear end of the cut belt-shaped member 19 forward in synchronism with and at the same speed as that of the conveyor 17, thereby preventing the belt-shaped member 19 from being changed in length after cutting. When the front end of the belt-shaped member 19 has arrived at the uppermost portion of the forming drum 11, the transfer of the belt-shaped member 19 is stopped. Thereafter, the cylinder 167 of the pressure-joining means 170 is actuated to extend its piston rod 168 so that the front end of the belt-shaped member 19 is urged and pressure-joined to the forming drum 11 by means of the pressure-joining unit 169. The piston rod 168 is retracted into the cylinder 167 to raise the pressure-joining unit 169 to its initial position.

The motor 141 is then energized so as to rotate the screw shaft 140 to move the beam 137 forwardly until the sensor 172 arrives at a position immediately above the uppermost portion of the forming drum 11 or the front end of the belt-shaped member 19. At the same time, the motor 151 is energized to rotate the screw shaft 150 so that the traveling frame 145 is moved at the same speed as that of the beam 137 but in the opposite direction to the movement thereof. As a result, the grasping means 163 remains in the position immediately forward of the cutting position without any movement.

Thereafter, the sensor 172 detects the front end of the belt-shaped member 19 and outputs the detection signal into the control means. The control means calculates the shifted distance of the front end of the belt-shaped member 19 from the set position on the basis of the detection signal. The motor 141 is then energized so as to rotate the screw shaft 140 to move the pressure-joining means 170 and the sensor 172 forward into the retracted positions shown in phantom lines in Fig. 5. In this case, the motor 151 is again energized so as to rotate the screw shaft 150 to prevent the grasping means 163 from moving forwardly in the same manner described above.

Thereafter, the motor 13 is energized to rotate the forming drum 11 at a predetermined circumferential speed, while the conveyor 17 and the grasping means 163 grasping the rear end of the belt-shaped member 19 are moved at a speed substantially the same as the circumferential speed of the forming drum 11 to supply the belt-shaped member 19 to the forming drum 11 so that the member 19 is attached to the circumference of the forming drum in one operation or without rest.

In this case, signals corresponding to the shifted distance of the front end of the belt-shaped member 19 are sent from the control means to the forming drum 11, the motor 151 and the conveyor 17 so that the circumferential speed of the forming drum 11 and the moving speeds of the conveyor 17 and the grasping means 163 are controlled to contract or elongate the belt-shaped member 19 to correct its length into the predetermined length L during the attaching operation. When the belt-shaped member 19 has been attached to the forming drum 11 with one circumferential length in this manner, the rotation of the forming drum 11 and the movements of the conveyor 17 and the grasping means 163 are stopped. After the rear end of the belt-shaped member 19 is released from the grasping means 163, the motor 159 is energized to raise the grasping means 163 into a retracted position.

Thereafter, the motor 141 is energized to move the horizontal beam 137 and the grasping means 163 in unison rearward until the pressure-joining unit 169 arrives at a position immediately above the uppermost portion of the forming drum 11. The cylinder 167 is then actuated to extend its piston rod 168 so that the rear end of the belt-shaped member 19 is urged against the forming drum 11 and the front and rear ends of the member 19 are pressure-joined with each other by means of the pressure-joining unit 169. The cylinder 167 is then actuated so as to retract its piston rod 168 to raise the pressure-joining unit 169 to its initial position. On the other hand, the motors 151 and 159 are energized to move the grasping means 163 to a position immediately forward of the urging unit 32, and the front end of the remaining belt-shaped member 19 is then grasped by means of the grasping means 163. The above is one cycle of the operation of the apparatus described above. This cycle is repeated thereafter.

As described above, the belt-shaped member 19 is previously cut into the predetermined length L which is grasped with its rear end by means of the grasping means 163 and supplied onto the forming drum 11 onto which the member 19 is attached in one operation in the above embodiment. Therefore, it is not required to stop the forming drum during attaching operation. As a result, times of start and stop of the forming drum 11 decrease to shorten the cycle time for the attachment of the belt-shaped member. Moreover, as the rear end of the belt-shaped member 19 is grasped by means of the grasping means 163 before commencement of the attachment, it is not required to stop the forming drum 11 for grasping the rear end of the belt-shaped member 19 during the attachment. Consequently, there is no risk of the belt-shaped member meandering during its attachment to the forming drum 11.

In the above embodiments, the belt-shaped member 19 is cut along its width direction by advancing the cutter 27 toward the anvil 20. The cutter may be moved along the width direction of the belt-shaped member for this purpose.

As can be seen from the above description, according to the invention a belt-shaped member can be attached to the forming drum with high efficiency without causing any meandering of the belt-shaped member.

While the invention has been particularly shown and described with reference to preferred embodiments thereof, it will be understood by those skilled in the art that the foregoing and other changes in form and details can be made therein without departing from the spirit and scope of the invention.

## Claims

1. A method for attaching a belt-shaped member (19) to a forming drum (11), comprising steps of grasping the front ends of a continuous belt-shaped member, transferring toward the forming drum the continuous belt-shaped member through a predetermined length (L) substantially equal to one circumferential length of the forming drum, grasping the transferred belt-shaped member at its portion immediately forward of a cutting position spaced the predetermined length from the front end of the belt-shaped member and fixing the belt-shaped member at its portion immediately rearward of the cutting position, cutting the belt-shaped member at the cutting position, transferring the cut belt-shaped member grasped at the front and rear ends and pressure-joining the front end to the forming drum, and attaching the belt-shaped member to the circumference of the forming drum by supplying the belt-shaped member to the forming drum, while it is being rotated.

2. A method for attaching a belt-shaped member (19) to a forming drum (11), comprising steps of grasping the front end of a continuous belt-shaped member, transferring toward the forming drum the continuous belt-shaped member grasped at its front end through a predetermined length (L) substantially equal to one circumferential length of the forming drum and arranging the belt-shaped member on a conveyor (17), releasing the grasped front end of the transferred belt-shaped member from grasping means (163), grasping the belt-shaped member at its portion immediately forward of a cutting position spaced the predetermined length from the front end of the belt-shaped member and fixing the belt-shaped member at its portion immediately rearward of the cutting position, cutting the belt-shaped member at the cutting position, transferring the cut belt-shaped member grasped at its rear end to the forming drum by the conveyor and pressure-joining the front end of the belt-shaped member to the forming drum, and attaching the belt-shaped member to the circumference of the forming drum in one operation by supplying the belt-shaped member grasped at its rear end to the forming drum, while it is being rotated.

3. A method as claimed in claim 2, characterized in that when the cut belt-shaped member (19) grasped at its rear end is transferred to the forming drum (11) by the conveyor (17), the grasped rear end of the belt-shaped member is moved forward at the same speed as that of the conveyor and in synchronism therewith, thereby preventing the belt-shaped member from being changed in length.

4. A method as claimed in claim 2 or 3, characterized in that after the front end of the belt-shaped member (19) has been pressure-joined to the forming drum (11), the front end of the belt-shaped member is detected to calculate a shifted distance of the front end of the belt-shaped member from a set position, and when the belt-shaped member is attached to the circumference of the forming drum by supplying the belt-shaped member to the rotating forming drum, the circumferential speed of the forming drum, the supplying speed of the belt-shaped member and the moving speed of the rear end thereof are controlled on the basis of the shifted distance to change the length of the belt-shaped member so as to correct it into the predetermined length during attaching it to the forming drum.

5. An apparatus for attaching a belt-shaped member (19) to a forming drum (11), comprising front end grasping means (74) for grasping the front end of a continuous belt-shaped member, front end driving means (47) for transferring the continuous belt-shaped member through a predetermined length (L) substantially equal to one circumferential length of the forming drum by moving the front end grasping means (74) toward the forming drum, rear end grasping means (75) for grasping the transferred belt-shaped member at its portion immediately forward of a cutting position spaced the predetermined length from the front end of the belt-shaped member, fixing means (32) for fixing the belt-shaped member at its portion immediately rearward of the cutting position, cutting means (30) for cutting at the cutting position the belt-shaped member grasped by the rear end grasping means (75) and fixed by the fixing means, and rear end driving means (48) for moving the rear end grasping means (75) grasping the rear end of the cut belt-shaped member at the same speed as that of the front end grasping means (74) and in synchronism therewith when the front end grasping means grasping the front end of the cut belt-shaped member is moved toward the forming drum (11), and the front end grasping means (74) pressure-joining the front end of the belt-shaped member to the forming drum when the front end has arrived at the forming drum, and then the rear end grasping means (75) moving toward the forming drum at a speed substantially the same as the circumferential speed of the forming drum being rotated, thereby supplying the belt-shaped member to the forming drum and attaching the member to the circumference of the forming drum.

6. Apparatus as claimed in claim 5, characterized in that each of the front end grasping means (74) and the rear end grasping means (75) comprises a grasping unit (66;67) for grasping the belt-shaped member (19) and two pressure-joining units (70,72;71,73) arranged on forward and rearward sides of the grasping unit (66;67) for pressure-joining the ends of the belt-shaped member.

7. Apparatus for attaching a belt-shaped member (19) to a forming drum (11), comprising grasping means (163) for grasping a continuous belt-shaped member, driving means (153) for transferring the continuous belt-shaped member through a predetermined length (L) substantially equal to one circumferential length of the forming drum by moving the grasping means (163) grasping the front end of the continuous belt-shaped member toward the forming drum, a conveyor (17) on which the belt-shaped member is arranged when the grasping means has released the front end of the belt-shaped member, fixing means (32) for fixing the belt-shaped member at its portion immediately rearward of a cutting position when the grasping means has been moved to a position immediately forward of the cutting position spaced the predetermined length from the front end of the belt-shaped member and has grasped the belt-shaped member at the position, cutting means (30) for cutting at the cutting position the belt-shaped member grasped by the grasping means (163) and fixed by the fixing means, and pressure-joining means (170) for pressure-joining the front end of the belt-shaped member to the forming drum when the front end has arrived at the forming drum by moving the conveyor and the grasping means grasping the rear end of the cut belt-shaped member at the same speeds and in synchronism with each other, thereby attaching the belt-shaped member to the circumference of the forming drum in one operation by moving the conveyor and the grasping means grasping the rear end of the cut belt-shaped member toward the forming drum at speeds substantially the same as the circumferential speed of the forming drum, while it is being rotated.

8. Apparatus as claimed in claim 7, characterized by further comprising a sensor (172) associated with the pressure-joining means (170) for detecting the front end of the belt-shaped member (19) pressure-joined to the forming drum.

9. Apparatus as claimed in claim 7 or 8, characterized by a horizontal beam (137) horizontally movable together with one of the pressure-joining means (170) and the grasping means (163), and a travelling frame (145) supporting the other of the pressure-joining means and the grasping means is fitted on a rail (146) fixed to the horizontal beam so as to be movably supported by the horizontal beam, thereby enabling said one of the pressure-joining means and the grasping means to move and the said other to remain at a position by moving the said other at the same speed as that of the said one but in opposite direction to that of the movement of the said one.

# FIG. 1

EP 0 518 691 A2

# FIG_2

FIG_3

# FIG. 4

FIG.5

# FIG_6